(19) Europäisches Patentamt
European Patent Office
Office européen des brevets

(11) **EP 3 491 335 B1**

(12) **EUROPÄISCHE PATENTSCHRIFT**

(45) Veröffentlichungstag und Bekanntmachung des Hinweises auf die Patenterteilung:
**09.09.2020 Patentblatt 2020/37**

(21) Anmeldenummer: **17736934.5**

(22) Anmeldetag: **06.07.2017**

(51) Int Cl.:
***G01C 21/16*** *(2006.01)*

(86) Internationale Anmeldenummer:
**PCT/EP2017/066946**

(87) Internationale Veröffentlichungsnummer:
**WO 2018/019539 (01.02.2018 Gazette 2018/05)**

(54) **VERFAHREN UND VORRICHTUNG ZUM BESTIMMEN DER ABSOLUTPOSITION EINES KRAFTFAHRZEUGS, ORTSBESTIMMUNGSSYSTEM, KRAFTFAHRZEUG**

METHOD AND APPARATUS FOR DETERMINING THE ABSOLUTE POSITION OF A MOTOR VEHICLE, LOCALIZATION SYSTEM, MOTOR VEHICLE

PROCÉDÉ ET DISPOSITIF POUR DÉTERMINER LA POSITION ABSOLUE D'UN VÉHICULE À MOTEUR, SYSTÈME DE LOCALISATION, VÉHICULE À MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.07.2016 DE 102016213893**

(43) Veröffentlichungstag der Anmeldung:
**05.06.2019 Patentblatt 2019/23**

(73) Patentinhaber: **Robert Bosch GmbH
70442 Stuttgart (DE)**

(72) Erfinder:
• **BAUS, Michael
  74321 Bietigheim-Bissingen (DE)**
• **KOSSIRA, Martin
  71672 Marbach am Neckar (DE)**
• **ROITH, Sebastian
  71640 Ludwigsburg (DE)**

(56) Entgegenhaltungen:
**DE-A1-102012 224 107     US-A1- 2006 287 824
US-A1- 2016 209 236**

EP 3 491 335 B1

**Beschreibung**

Die Erfindung betrifft ein Verfahren zum Bestimmen der Absolutposition eines Kraftfahrzeugs in einem globalen Koordinatensystem, wobei eine erste Position mittels eines satellitengestützten Navigationssystems erfasst wird, wobei eine zweite Position mittels wenigstens eines Inertialsensors und einer Integration seiner Messwerte berechnet wird, und wobei in Abhängigkeit von der ersten Position und der zweiten Position die Absolutposition des Kraftfahrzeugs mithilfe eines Fusionsfilters ermittelt wird.

Weiterhin betrifft die Erfindung eine Vorrichtung zur Durchführung des Verfahrens, ein Ortsbestimmungssystem mit einer derartigen Vorrichtung und ein Kraftfahrzeug mit einem derartigen Ortsbestimmungssystem.

Stand der Technik

Zur Bestimmung der Absolutposition eines Kraftfahrzeugs ist es bekannt, diese mithilfe von zwei unterschiedlichen Systemen zu bestimmen. Zum einen wird ein satellitengestützes Navigationssystem dazu genutzt, die Position eines Kraftfahrzeugs in einem globalen Koordinatensystem festzustellen. Weil jedoch das satellitengestützte Navigationssystem nicht zu jeder Zeit verlässliche Daten liefern kann, beispielsweise wenn sich das Kraftfahrzeug in einem Tunnel befindet, ist es außerdem bekannt, die Messwerte zumindest eines Inertialsensors auszuwerten, um in Abhängigkeit von der mittels des Inertialsensors erfassten Bewegung des Kraftfahrzeugs die aktuelle Position des Kraftfahrzeugs zu berechnen. Es ist bekannt, dass die durch diese beiden System erfassten Positionen mittels eines Fusionsfilters miteinander verglichen oder verrechnet werden, um die Absolutposition des Kraftfahrzeugs zu bestimmen. Solche Systeme sind beispielsweise aus US 2016/209236 A1, DE 10 2012 224107 A1 und US 2006/287824 A1 bekannt.

Dabei kann es passieren, dass die Absolutposition unerwartet springt. Dies liegt darin begründet, dass bei der Berechnung der zweiten Position in Abhängigkeit von den Messwerten des Inertialsensors aufgrund von Messfehlern die berechnete zweite Position nicht der tatsächlichen Position entsprechen muss. Dabei können sich die Messfehler addieren, was dazu führt, dass die zweite Position immer weiter von der Absolutposition abweicht. Sobald dann wieder eine erste Position erfassbar ist, springt die Absolutposition zu der mittels des Navigationssystems erfassten ersten Position. Hierdurch können sich einerseits Irritationen beim Fahrer und andererseits auch Probleme bei Assistenzsystemen im Kraftfahrzeug, die in Abhängigkeit von der Absolutposition des Kraftfahrzeugs arbeiten, ergeben.

Offenbarung der Erfindung

Das erfindungsgemäße Verfahren mit den Merkmalen des Anspruchs 1 hat den Vorteil, dass sprungfreie Signalwerte beziehungsweise eine sprungfreie Absolutposition des Kraftfahrzeugs bestimmt wird, wobei eine sprungfreie, kontinuierliche, und begrenzte Berechnung der zweiten Position des Kraftfahrzeugs erfolgt. Erfindungsgemäß wird dies dadurch erreicht, dass ein Fehler der aktuelle bestimmten zweiten Position in Abhängigkeit von einem Vergleich der zuletzt erfassten ersten Position mit einer zugehörigen berechneten zweiten Position bestimmt und bei der Bestimmung der aktuellen zweiten Position berücksichtigt wird. Damit wird ausgehend von dem zuletzt erfassten Fehler die Bestimmung der aktuellen zweiten Position korrigiert beziehungsweise kompensiert, sodass der Gesamtfehler geringer ausfällt oder entfällt, und dass insofern die Gefahr eines Sprungs der Absolutposition vermindert oder verhindert wird.

Gemäß einer bevorzugten Weiterbildung der Erfindung ist vorgesehen, dass als Fehler die Differenz zwischen der zuletzt erfassten ersten Position und der zugehörigen zweiten Position bestimmt wird. Hierdurch wird auf einfache Art und Weise ein Fehler ermittelt und eine Abschätzung der korrekten zweiten Position optimiert.

Weiterhin ist bevorzugt vorgesehen, dass als zugehörige zweite Position die zweite Position gewählt wird, die zu demselben Zeitpunkt wie die zuletzt erfasste erste Position ermittelt wurde. Damit ist sichergestellt, dass der Fehler möglichst klein gehalten wird und die korrekten Werte miteinander verglichen werden, um die Bestimmung der Absolutposition zu optimieren und insbesondere ein Springen zu verhindern.

Gemäß einer bevorzugten Ausführungsform der Erfindung ist vorgesehen, dass als Fusionsfilter ein Kalman-Filter verwendet wird. Kalman-Filter sind grundsätzlich bekannt und erlauben eine geeignete Zusammenführung der erfassten und der berechneten Position.

Erfindungsgemäss wird für die Integration ein kontinuierlich differenzierbarer Modulo-Integrator verwendet. Der sogenannte "Continuous Differentiable Modulo Integrator (CDMI)" erlaubt eine Schätzung durch Integration unter Berücksichtigung bestimmter Vorgaben, die dazu führen, dass ein immer ableitbares Signal erhalten wird, und dass dem Benutzer die Möglichkeit gibt, selbst zu entscheiden, zu welchem Zeitpunkt ein Sprung im Signal beziehungsweise der Position zugelassen werden soll und wann nicht.

Insbesondere ist vorgesehen, dass ein Schätzwert für die zweite Position bestimmt und durch einen vorgebbaren Wertebereich begrenzt wird. Durch das Begrenzen wird einerseits erreicht, dass das Ausgangssignal integrierbar bleibt, und andererseits, dass der Ausgangwert beschränkt ist und nicht davonlaufen kann.

Gemäß einer bevorzugten Weiterbildung der Erfindung ist vorgesehen, dass zur Durchführung des Verfahrens ein Strapdown-Algorithmus verwendet wird. Durch diesen lässt sich das beschriebene Verfahren in vorteilhafter Weise umsetzen. Die erfindungsgemäße Vorrichtung mit den Merkmalen des Anspruchs 8 zeichnet sich durch ein speziell hergerichtetes Steuergerät aus, das bei bestimmungsgemäßem Gebrauch das erfindungsgemäße Verfahren durchführt.

Das erfindungsgemäße Ortbestimmungssystem mit dem Merkmal des Anspruchs 9, das wenigstens ein satellitengeschütztes Navigationssystem zum Bestimmen einer ersten Position und wenigstens einen Inertialsensor zum Bestimmen einer zweiten Position des Kraftfahrzeugs aufweist, zeichnet sich durch die erfindungsgemäße Vorrichtung zum Bestimmen der Absolutposition aus.

Das erfindungsgemäße Kraftfahrzeug mit den Merkmalen des Anspruchs 10 zeichnet sich durch das erfindungsgemäße Ortsbestimmungssystem aus.

Weitere Vorteile und bevorzugte Merkmale und Merkmalskombinationen ergeben sich insbesondere aus dem zuvor beschriebenen sowie aus den Ansprüchen.

Im Folgenden soll die Erfindung anhand der Zeichnung näher erläutert werden. Dazu zeigen:

Figur 1 ein Kraftfahrzeug in einer vereinfachten Darstellung,

Figur 2 ein Verfahren zum Bestimmen der Absolutposition des Kraftfahrzeugs,

Figur 3 eine vereinfachte Darstellung eines kontinuierlich differenzierbaren Modulointegrators und

Figur 4 ein Programm zur Durchführung des Verfahrens in einer vereinfachten Darstellung.

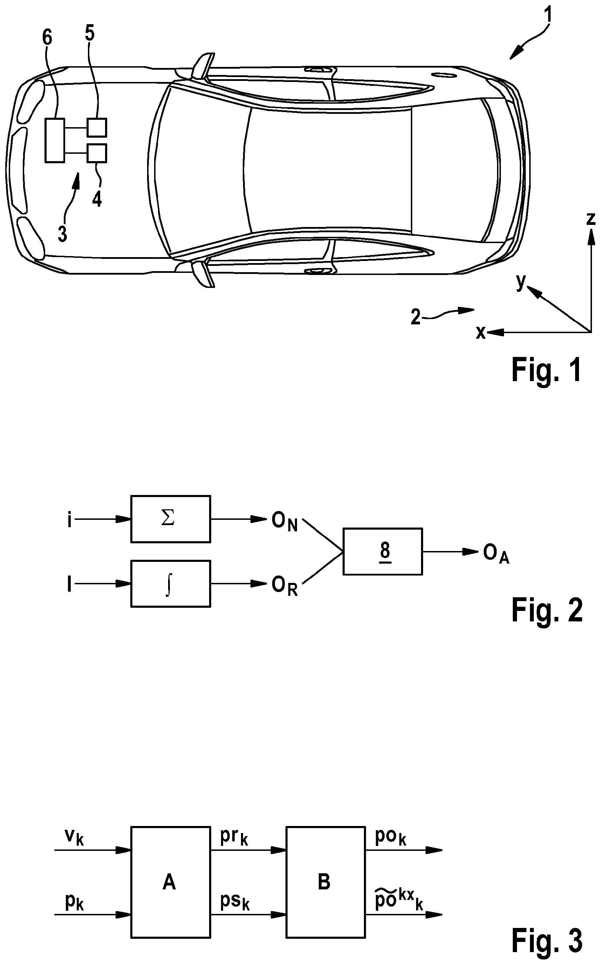

Figur 1 zeigt in einer vereinfachten Darstellung ein Kraftfahrzeug 1, das sich innerhalb eines globalen Koordinatensystems 2 bewegt. Um die absolute Position des Kraftfahrzeugs 1 innerhalb des Koordinatensystems 2 zu bestimmen, weist das Kraftfahrzeug ein Ortsbestimmungssystem 3 auf, das ein satelittengestütztes Navigationssystem 4 sowie eine oder mehrere Inertialsensoren 5 aufweist. Mittels des satelittengestützten Navigationssystems 4 wird eine aktuelle erste Position des Kraftfahrzeugs 1 im globalen Koordinatensystem gemessen. Weil das Messen der Position mittels des Navigationssystems 4 jedoch nicht zu jedem Zeitpunkt möglich ist, wird zusätzlich mittels des mindestens einen Inertialsensors 5 eine aktuelle zweite Position des Kraftfahrzeugs berechnet. Durch einen sogenannten Strapdown-Algorithmus wird durch insbesondere mehrfache Integration der Messdaten des Inertialsensors 5, insbesondere von Beschleunigungen und Drehraten, die zweite Position berechnet. Die Integration hat zur Folge, dass die zweite Position ableitbar ist. Dies ist für Regelfunktionen wichtig, damit keine Sprünge in den Ausgangssignalen entstehen, die leicht zu Regelinstabilitäten führen können. Allerdings kann Integration auch dazu führen, dass kleinere Messfehler oder Fehler in der Auswertung der Inertialdaten durch fehlerhafte Fortpflanzung und Aufintegration zu immer größer werdenden Fehlern bei der Berechnung der zweiten Position führen.

GNSS-Messungen mittels des Navigationssystems 4 können diese Fehler begrenzen. Jedoch sind diese Messungen nicht immer vorhanden. Fährt beispielsweise das Kraftfahrzeug 1 durch einen Tunnel, so steht das Navigationssignal gegebenenfalls nicht zur Verfügung und eine GNSS-Positionsmessung ist nicht möglich. Dies kann dazu führen, dass die Positionsberechnung durch den Strapdown-Algorithmus auf einen großen Fehler anwächst. Steht dann die GNSS-Messung wieder zur Verfügung, springt die Position plötzlich.

Figur 2 zeigt hierzu in vereinfachter Weise ein Verfahren zum Bestimmen der Absolutposition 1. Ausgegangen wird dabei von einem durch den Inertialsensor 5 erfassten Positionswert I, der durch Integration zu dem Positionswert $O_R$ führt. Gleichzeitig - sofern vorhanden - wird mittels des Signals i des Navigationssystems 4 die Position $O_N$ des Kraftfahrzeugs 1 bestimmt. Die gemessene Position $O_N$ und die berechnete Position $O_R$, also die erste und die zweite Position, werden durch einen Fusionsfilter 6 zusammengeführt, um die Absolutposition $O_A$ zu bestimmen.

Hierbei wird nun klar, dass dann, wenn das Positionssignal i des Navigationssystems 4 nicht zur Verfügung steht und die erste Position aufgrund eines Messfehlers zu einer immer größeren Abweichung der errechneten zweiten Position $O_R$ zu der tatsächlichen Position führt, das Zusammenführen der ersten oder zweiten Position, bei wieder erfassbaren Navigationssignal i, zu einem Sprung in der Absolutposition $O_A$ führen kann.

Um dies zu vermeiden, ist vorgesehen, dass ein Fehler der aktuell bestimmten zweiten Position in Abhängigkeit von einem Vergleich der zuletzt erfassten ersten Position mit einer zugehörigen berechneten zweiten Position bestimmt und bei der Bestimmung der aktuellen zweiten Position berücksichtigt wird. Dabei soll ein Kalman-Filter als Fusionsfilter verwendet und ein kontinuierlich differenzierbarer Modulo Integrator verwendet werden. Dies wird im Folgenden näher erörtert: Zunächst soll das Konzept des kontinuierlich differenzierbaren Modulointegrators (Continuous Differenciable Modulo Integrator = CDMI) an einem einfachen Integrator dargestellt werden. Später wird der Übertrag auf das reale Beispiel erörtert.

Das physikalische System soll zunächst durch die folgende Gleichung beschrieben werden:

$$\mathrm{p}(t_x) = \int_0^{t_x} v(t)\,dt + p(t=0) \qquad (1)$$

Zur besseren Veranschaulichung könnte p(t) die Position des Kraftfahrzeugs und v(t) seine Geschwindigkeit sein. Die Position p ergibt sich zu jedem Zeitpunkt $t_x$ aus der Position zum Anfangszeitpunkt p(t=0) sowie der integrierten Geschwindigkeit v(t) seit diesem Anfangszeitpunkt.

Sei $V_k$ nun der gemessene und digitalisierte Wert des Signal v(t) zum Zeitpunkt $t=t_k$ des Systems (1) [wert -und zeitdiskret]. Sei nun $e_{v_k}$ der gesamte Messfehler für diese Messung. Damit gilt

$$v_k = v(t_k) + e_{v_k} \qquad (2)$$

Ferner sei $p_k$ der gemessene und digitalisierte Wert des Signal p(t) zum Zeitpunkt $t=t_k$ des Systems (1) [wert- und zeitdiskret]. Sei nun $e_{p_k}$ der gesamte Messfehler zu dieser Messung. Damit gilt

$$p_k = p(t_k) + e_{p_k} \qquad (3)$$

Ferner sei k ganzzahlig und k=[0..∞]. Ohne Beschränkung der Allgemeinheit $v_k$ für jedes mögliche k vorhanden/gemessen jedoch $p_k$ nicht. Das heißt, es gibt nicht zu jedem Zeitpunkt eine Messung von $p_k$. Ferner sei der einfachhalt halber $t_k=0$ für k=0 und $t_k>t_{k-1}$. Ebenfalls sei p(0) = 0.

Durch Integration lässt sich aus den verschiedenen $v_k$ ein Schätzwert $\tilde{p}_k$ für p($t_k$) bestimmen. Gleichung (4) stellt dazu ein mögliches und einfaches da: Integrationsschema

$$\tilde{p}_k = \sum_{j=0}^{k-1} v_j * (t_{j+1} - t_j) = v_j * \left(t_{j+1} - t_j\right) + \tilde{p}_{k-1} \quad f\ddot{u}r\ k > 0 \qquad (4)$$

Es seien nun zwei Eigenschaften von $\tilde{p}_k$ aufgezeigt/definiert

1) $\tilde{p}_k$ ist ableitbar. Es ergibt sich mit der Definition $\dfrac{\Delta \tilde{p}_k}{\Delta t} = \dfrac{\tilde{p}_k - \tilde{p}_{k-1}}{t_k - t_{k-1}}$ die Ableitung des Schätzwertes zu $\dfrac{\Delta \tilde{p}_k}{\Delta t} = v_{k-1} = v(t_{k-1}) + e_{v_{k-1}}$ was genau dem Messwert entspricht. Das bedeutet, die Ableitung des Schätzwertes entspricht dem Messwert der Ableitung selbst. Das heißt bis auf den Messfehler $e_{vk}$ entspricht die Ableitung des realen physikalischen Wert.

2) Auch $p_k$ ist ableitbar. Es gilt für kleine $\Delta t = t_k - t_{k-1}$ das $\dfrac{\Delta p_k}{\Delta t} = \dfrac{p_k - p_{k-1}}{t_k - t_{k-1}} =$ $\dfrac{p(t_k) - p(t_{k-1})}{t_k - t_{k-1}} + \dfrac{e_{p_k} - e_{p_{k-1}}}{t_k - t_{k-1}} = v(t_k) + \dfrac{e_{p_k} - e_{p_{k-1}}}{t_k - t_{k-1}}$ nur abhänig ist von den beiden Messfehlern von p.

3) Durch die Messfehler $e_{vk}$ ist der Fehler zwischen dem Schätzwert $\tilde{p}_k$ und dem realen Wert von p($t_k$) unbeschränkt. Das heißt bei realen Messfehlern $e_{vk}$ (z.B. konstante Fehler, statistisch verteilte Fehler, ...) wird $\tilde{p}_k$ irgendwann immer größer als jeder maschinell darstellbare Wert selbst wenn p(t) beschränkt bleibt. Zusammengefasst ist $\tilde{p}_k$ ableitbar aber nicht beschränkt.

Durch Fusionsfilter kann man verschiedene Messungen der gleichen Größe kombinieren. In den bisherigen Ausführungen gibt es den Schätzwert $\tilde{p}_k$ von p und den Messwert $p_k$ selbst. Man kann davon ausgehen, dass der Messwert $p_k$ genauer ist da sich die Fehler in den Messwerten $v_k$ zur Berechnung von $\tilde{p}_k$ aufsummieren.

Im Folgenden soll ohne Beschränkung der Allgemeinheit ein einfacher Filter, insbesondere ein Kalmannfilter, verwendet werden um einen fusionierten Schätzwert $\hat{p}_k$ von p aus den Messungen zu berechnen. Ist die Messung $p_k$ von p zum Messpunkt k vorhanden, soll diese als Schätzgröße $\hat{p}_k$ von p verwendet und wenn keine Messung vorhanden ist, die Messwerte $v_k$ von v vom letzten vorhanden Messwert von p integriert werden um $\hat{p}_k$ zu ermitteln. Es sei $X_k$ der letzte Messpunkt vor k, bei dem $p_k$ gemessen wurde.

$$\hat{p}_k = \begin{cases} p_k & wenn\ p_k\ gemessen \\ p_{X_k} + \tilde{p}_k - \tilde{p}_{X_k} = p_{X_k} + \sum_{j=X_k}^{k-1} v_j * (t_{j+1} - t_j) & sonst \end{cases} \qquad (5)$$

Es sollen nun für $\hat{p}_k$ die zwei folgenden Eigenschaften beschrieben werden.

1) Die Ableitung von $\hat{p}_k$ ist bei den Übergangsstellen nicht sinnvoll. Verwendet man die gleiche Definition wie zuvor $\frac{\Delta \hat{p}_k}{\Delta t} = \frac{\hat{p}_k - \hat{p}_{k-1}}{t_k - t_{k-1}}$ und schaut sich das einfache Beispiel an, bei dem beim Zeitpunkt k zum ersten mal ein Messwert $p_k$ von p vorhanden ist, ergibt sich für kleine $\Delta t = t_k - t_{k-1}$ folgendes Ergebnis:

$$\frac{\Delta \hat{p}_k}{\Delta t} = \frac{\hat{p}_k - \hat{p}_{k-1}}{t_k - t_{k-1}} = \frac{p_k - }{t_k - t_{k-1}} = \frac{p_k - \sum_{j=0}^{k-2} v_j * \left(t_{j+1} - t_j\right)}{t_k - t_{k-1}}$$

$$= \frac{p(t_k) + e_{v_{k-1}} - \sum_{j=0}^{k-2} v(t_j) * \left(t_{j+1} - t_j\right) - \sum_{j=0}^{k-2} e_{v_j} * \left(t_{j+1} - t_j\right)}{t_k - t_{k-1}} =$$

$$\frac{p(t_k) - \sum_{j=0}^{k-2} v(t_j)*(t_{j+1}-t_j)}{t_k - t_{k-1}} + \frac{e_{v_{k-1}} - \sum_{j=0}^{k-2} e_{v_j}*(t_{j+1}-t_j)}{t_k - t_{k-1}} = v(t_k) + \frac{e_{v_{k-1}} - \sum_{j=0}^{k-2} e_{v_j}*(t_{j+1}-t_j)}{t_k - t_{k-1}}$$

Es haben sich alle Messfehler von $v_k$ aufsummiert. Der Fehler der Ableitung wird groß, und umso größer je länger die Abstände zwischen den Messungen von $p_k$ und p sind.

2) Für endliche Zeiten, in denen keine Messung von p existiert, bleibt $\hat{p}_k$ beschränkt wenn auch p beschränkt ist. Durch den direkten Messwert von p kann der aufintegrierte Messfehler der Messungen von v wieder reduziert werden. Zusammengefasst ist $\hat{p}_k$ somit zu gewissen Zeitpunkten nicht ableitbar aber beschränkt.

Es kann keine Lösung geben, die zu jedem Zeitpunkt ableitbar ist und auch beschränkt bleibt. Es kann aber durch das im Folgenden beschriebene Konzept erreicht werden, dass der Nutzer des Signals für jeden Zeitraum ein ableitbares Signal zur Verfügung hat. Der Signalnutzer kann selbst entscheiden zu welchen Zeitpunkten er einen Sprung zulässt. Er ist nicht abhängig davon, zu welchem Zeitpunkt eine Messung von p vorhanden ist und wann mit einem Sprung rechnen muss. Der Nutzer hat zu jedem Zeitpunkt ein fusioniertes Signal und kann zu jedem Zeitintervall ein sprungfreies Signal nutzen.

Es werden im Wesentlichen zwei Variablen/Werte genutzt. Der erste Wert $pr_k$ ist der ableitbare Anteil von p. Er entspricht prinzipiell dem integrierten Schätzwert $\tilde{p}_k$.

$$pr_k = v_j * \left(t_{j+1} - t_j\right) + pr_{k-1} \quad f\ddot{u}r\ k > 0 \tag{6}$$

Zusätzlich zu diesem wird ein zweiter Wert $ps_k$ berechnet der den Fehler des integrierten Schätzwertes $\tilde{p}_k$ zum (zuletzt) gemessenen Wert $p_k$ berechnet/darstellt. Folgende Gleichung gibt die Berechnung wieder:

$$ps_k = \begin{cases} \tilde{p}_k - p_k & wenn\ p_k\ gemessen \\ ps_{k-1} & sonst \end{cases} \tag{7}$$

Um das Problem der Unbeschränktheit von $pr_k$ zu lösen, wird $pr_k$ in einen begrenzten Wertebereich gepackt, die Änderung wird durch Korrektur von $ps_k$ kompensiert. Der Wertebereich sei [0 $P_{max}$]. Es sei dabei vorliegend $P_{max}$ so gewählt, dass zwischen zwei beliebigen Messpunkten k und k+1 die Änderungen von p kleine genug ist. Es soll folgende Bedingung gelten:

$$|\tilde{p}_k - \tilde{p}_{k-1}| < \frac{P_{max}}{2} \quad \forall\ k \tag{8}$$

Es werden die folgenden beiden Operationen auf den Werten durchgeführt bis $pr_k$ im Wertebereich liegt. Das Packen wird folgendermaßen durchgeführt:

$$wenn\ pr_k < 0 \quad dann\ pr_k = pr_k + P_{max}\ und\ ps_k = ps_k - P_{max}$$
$$wenn\ pr_k > P_{max} \quad dann\ pr_k = pr_k - P_{max}\ und\ ps_k = ps_k + P_{max} \tag{9}$$

$pr_k$ ist durch diese Packung nicht mehr ableitbar. Allerdings kann $pr_k$ durch einfache Operationen in eine ableitbare Größe gebracht werden, da man weiß, dass sich zwischen $pr_k$ und $pr_{k-1}$ kein Sprung der größer als $\frac{P_{max}}{2}$ ist auftreten kann, ohne dass eine Packung stattgefunden hat. Aufgrund dieser Eigenschaft kann das Signal wieder entpackt werden ("unwrapping").

Die Nutzung des besten Wertes $po_k$ kann erreicht werden, indem $pr_k$ und $ps_k$ addiert werden. Unter der Annahme, dass $p_k$ jeweils den genauste Wert für p darstellt, ist $po_k$ zu jedem Zeitpunkt der beste Schätzwert.

$$po_k = pr_k + ps_k \qquad\qquad (10)$$

Die Berechnungen weisen folgende Eigenschaften auf

1) $px_k$ ist wie $\tilde{p}_k$ ableitbar.

2) Ebenfalls ist $\widetilde{po}^{kx}_k = px_k + ps_{kx}$ für jedes feste (aber beliebige) kx mit $kx \le k$ über alle k ableitbar und gleichzeitig die beste ableitbare Schätzung. Das bedeutet, der Signalnutzer kann zu jedem Zeitpunkt $ps_k$ auf einem Wert festhalten und erhält für alle Folgewerte ableitbare Schätzwerte.

3) $pr_k$ ist auf einen Wertebereich beschränkt

4) $po_k$ hat die gleichen Eigenschaften wie $\hat{p}_k$ und ist beschränkt (wenn p beschränkt ist) und nicht ableitbar

Das beschriebene Verfahren kann also verwendet werden, um Signale eines Sensors mit entsprechenden Eigenschaft zu kodieren, zu übertragen und die Kodierung wieder rückgängig zu machen.

Figur 3 zeigt dazu in einer vereinfachten Darstellung, wie die Werte $pr_k$ und $ps_k$ übertragen werden. Beide Werte sind begrenzt, sofern p begrenzt ist. Nach der Entschlüsselung wird zu jedem Zeitpunkt k ein optimales Signal $po_k$ und für jedes Zeitintervall $[t_{kx}, t_k]$ ein ableitbares Signal $po^{kx}_k$.

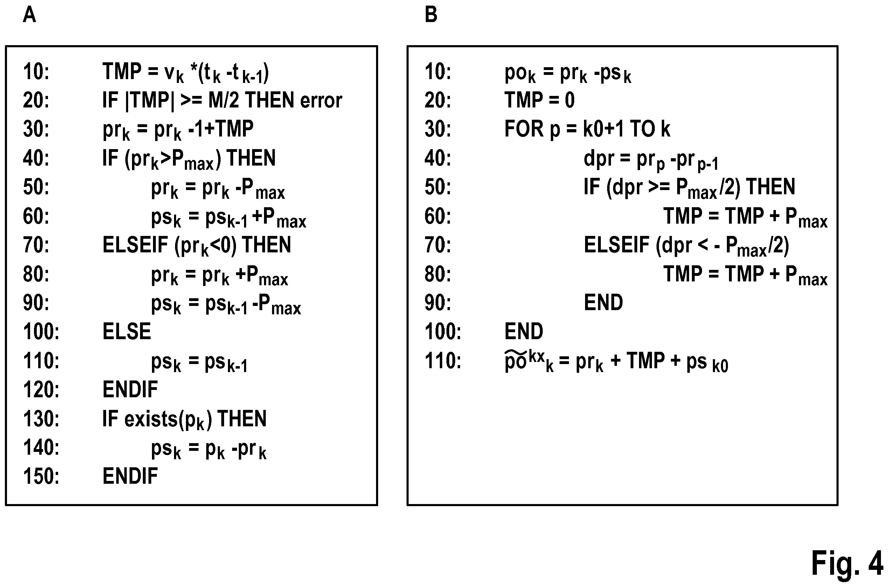

Der in Figur 4 gezeigte, vereinfachte Programmiercode fasst die oben beschriebene Codierung A und Decodierung B zusammen. Dabei ist k0 der Zeitpunkt, ab welchem $po^{kx}_k$ ableitbar ist.

Grundsätzlich kann das beschriebene Verfahren auf beide Sensoren mit ein oder mehreren Messgrößen angewandt werden, die dem physikalischen Modell gemäß Gleich (1) genügen. Ein expliziter Anwendungsfall ist der zuvor beschriebene Strapdown-Algorithmus, von dem eine beliebige Anzahl seiner Integratoren durch die dargestellte CDMI-Methode ausgetauscht werden. Die Kommunikation zwischen Sensor und Nutzer kann eine reine softwarebasierte digitale Schnittstelle oder auch jegliche Art von Kommunikation zwischen einer physikalischen Schnittstelle (beispielsweise SPI, CAN, Ethernet ....) sein.

Optional wird $ps_k$ nur dann übertragen, wenn es sich ändert. Dadurch kann Bandbreite gespart werden. Außerdem können pk und $v_k$ auch aus mehreren weiteren Messgrößen fusionierte beziehungsweise gemittelte Größen sein. Von Bedeutung ist, das zwischen den repräsentierten physikalischen Größen die Integralbeziehung gemäß Gleichung (1) gilt. Statt der einfachen Integration in den Gleichungen (4) beziehungsweise (6) können auch genauere Indikationsschematas verwendet werden, wie beispielsweise Trapezintegration, Integration über mehrere Stützpunkte oder dergleichen.

## Patentansprüche

1. Verfahren zum Bestimmen der Absolutposition eines Kraftfahrzeugs (1) in einem globalen Koordinatensystem (2), wobei eine erste Position mittels eines satellitengestützten Navigationssystems (4) erfasst wird, wobei eine zweite Position mittels wenigstens eines Inertialsensors (5) und einer Integration seiner Messwerte berechnet wird, und wobei in Abhängigkeit von der ersten Position und der zweiten Position die Absolutposition des Kraftfahrzeugs (1) mithilfe eines Fusionsfilters ermittelt wird, wobei ein Fehler der aktuell bestimmten zweiten Position in Abhängigkeit von einem Vergleich der zuletzt erfassten ersten Position mit einer zugehörigen zweiten Position bestimmt und bei der Bestimmung der aktuellen zweiten Position berücksichtigt wird, **dadurch gekennzeichnet, dass** für die Integration ein kontinuierlich differenzierbarer Modulointegrator verwendet wird.

2. Verfahren nach Anspruch 1, **dadurch gekennzeichnet, dass** als Fehler die Differenz zwischen der zuletzt erfassten ersten Position und der zugehörigen zweiten Position bestimmt wird.

3. Verfahren nach einem der vorhergehenden Ansprüche, **dadurch gekennzeichnet, dass** als zugehörige zweite Position die zweite Position gewählt wird, die zum selben Zeitpunkt wie die zuletzt erfasste erste Position ermittelt wurde.

4. Verfahren nach einem der vorhergehenden Ansprüche, **dadurch gekennzeichnet, dass** als Fusionsfilter ein Kalman-Filter verwendet wird.

5. Verfahren nach einem der vorhergehenden Ansprüche, **dadurch gekennzeichnet, dass** ein Schätzwert für die zweite Position bestimmt und durch einen vorgebbaren Wertebereich begrenzt wird.

6. Verfahren nach einem der vorhergehenden Ansprüche, **dadurch gekennzeichnet, dass** zur Durchführung des Verfahrens ein Strapdown-Algorithmus verwendet wird.

7. Vorrichtung zum Bestimmen der Absolutposition eines Kraftfahrzeugs (1), das wenigstens ein satellitengestütztes Navigationssystem (4) zur Bestimmung einer ersten Position und wenigstens einen Inertialsensor (5) zum Bestimmen einer zweiten Position aufweist, **gekennzeichnet durch** ein Steuergerät (6), das speziell dazu hergerichtet ist, bei bestimmungsgemäßen Gebrauch das Verfahren nach einem oder mehreren der Ansprüche 1 bis 6 durchzuführen.

8. Ortsbestimmungssystem (3) eines Kraftfahrzeugs (1) mit wenigstens einem satellitengestützten Navigationssystem (4) zur Bestimmung einer ersten Position und mit wenigstens einem Inertialsensor (5) zum Bestimmen einer zweiten Position des Kraftfahrzeugs (1) und mit einer Vorrichtung nach Anspruch 7 zum Bestimmen der Absolutposition des Kraftfahrzeugs (1) in Abhängigkeit von der ersten und der zweiten Position.

9. Kraftfahrzeug (1) mit einem Ortsbestimmungssystem (3) nach Anspruch 8.

**Claims**

1. Method for determining the absolute position of a motor vehicle (1) in a global coordinate system (2), wherein a first position is recorded by means of a satellite-assisted navigation system (4), wherein a second position is calculated by means of at least one inertial sensor (5) and integration of its measured values, and wherein the first position and the second position are taken as a basis for ascertaining the absolute position of the motor vehicle (1) using a fusion filter, wherein an error in the currently determined second position is determined on the basis of a comparison of the most recently recorded first position with an associated second position and is taken into consideration for determining the current second position, **characterized in that** a continuous differentiable modulo integrator is used for the integration.

2. Method according to Claim 1, **characterized in that** the error determined is the difference between the most recently recorded first position and the associated second position.

3. Method according to either of the preceding claims, **characterized in that** the associated second position chosen is the second position that was ascertained at the same time as the most recently recorded first position.

4. Method according to one of the preceding claims, **characterized in that** the fusion filter used is a Kalman filter.

5. Method according to one of the preceding claims, **characterized in that** an estimate is determined for the second position and bounded by a prescribable range of values.

6. Method according to one of the preceding claims, **characterized in that** a strapdown algorithm is used for performing the method.

7. Apparatus for determining the absolute position of a motor vehicle (1) that has at least one satellite-assisted navigation system (4) for determining a first position and at least one inertial sensor (5) for determining a second position, **characterized by** a controller (6) that is set up specifically to perform the method according to one or more of Claims 1 to 6 when used as intended.

8. Location determination system (3) of a motor vehicle (1) having at least one satellite-assisted navigation system (4) for determining a first position and having at least one inertial sensor (5) for determining a second position of the motor vehicle (1) and having an apparatus according to Claim 7 for determining the absolute position of the motor vehicle (1) on the basis of the first and second positions.

9. Motor vehicle (1) having a location determination system (3) according to Claim 8.

**Revendications**

1. Procédé permettant de déterminer la position absolue d'un véhicule à moteur (1) dans un système de coordonnées mondial (2), dans lequel une première position est détectée au moyen d'un système de navigation assisté par satellite (4), dans lequel une deuxième position est calculée au moyen d'au moins un capteur inertiel (5) et d'une intégration de ses valeurs de mesure, et dans lequel la position absolue du véhicule à moteur (1) est déterminée en fonction de la première position et de la deuxième position à l'aide d'un filtre de fusion, dans lequel une erreur de la deuxième position déterminée instantanément est déterminée en fonction d'une comparaison entre la première position détectée en dernier lieu et une deuxième position associée et est prise en compte lors de la détermination de la deuxième position instantanée, **caractérisé en ce qu'**un modulo-intégrateur continuellement différentiable est utilisé pour l'intégration.

2. Procédé selon la revendication 1, **caractérisé en ce que** la différence entre la première position détectée en dernier lieu et la deuxième position associée est déterminée en tant qu'erreur.

3. Procédé selon l'une des revendications précédentes, **caractérisé en ce que** la deuxième position qui a été détectée au même instant que la première position détectée en dernier lieu est sélectionnée en tant que deuxième position associée.

4. Procédé selon l'une des revendications précédentes, **caractérisé en ce qu'**un filtre de Kalman est utilisé en tant que filtre de fusion.

5. Procédé selon l'une des revendications précédentes, **caractérisé en ce qu'**une valeur estimée pour la deuxième position est déterminée et est limitée par une plage de valeurs prédéfinissable.

6. Procédé selon l'une des revendications précédentes, **caractérisé en ce qu'**un algorithme de type Strapdown est utilisé pour mettre en œuvre le procédé.

7. Dispositif permettant de déterminer la position absolue d'un véhicule à moteur (1) qui comporte au moins un système de navigation assisté par satellite (4) permettant de déterminer une première position et au moins un capteur inertiel (5) permettant de déterminer une deuxième position, **caractérisé par** un appareil de commande (6) qui est spécialement adapté pour mettre en œuvre le procédé selon l'une ou plusieurs des revendications 1 à 6 lorsqu'il est utilisé de la manière prévue.

8. Système de localisation (3) d'un véhicule à moteur (1) comprenant au moins un système de navigation assisté par satellite (4) permettant de déterminer une première position et au moins un capteur inertiel (5) permettant de déterminer une deuxième position du véhicule à moteur (1) et comprenant un dispositif selon la revendication 7 permettant de déterminer la position absolue du véhicule à moteur (1) en fonction des première et deuxième positions.

9. Véhicule à moteur (1) comprenant un système de localisation (3) selon la revendication 8.

**Fig. 1**

$$i \longrightarrow \boxed{\Sigma} \longrightarrow O_N$$

$$I \longrightarrow \boxed{\int} \longrightarrow O_R$$

$$\longrightarrow \boxed{\underline{8}} \longrightarrow O_A$$

**Fig. 2**

$v_k \longrightarrow \boxed{A} \xrightarrow{pr_k} \boxed{B} \xrightarrow{po_k}$

$p_k \longrightarrow \phantom{A} \xrightarrow{ps_k} \phantom{B} \xrightarrow{\widetilde{po}^{kx}{}_k}$

**Fig. 3**

A

```
10:     TMP = v_k *(t_k -t_{k-1})
20:     IF |TMP| >= M/2 THEN error
30:     pr_k = pr_k -1+TMP
40:     IF (pr_k>P_max) THEN
50:             pr_k = pr_k -P_max
60:             ps_k = ps_{k-1} +P_max
70:     ELSEIF (pr_k<0) THEN
80:             pr_k = pr_k +P_max
90:             ps_k = ps_{k-1} -P_max
100:    ELSE
110:            ps_k = ps_{k-1}
120:    ENDIF
130:    IF exists(p_k) THEN
140:            ps_k = p_k -pr_k
150:    ENDIF
```

B

```
10:     po_k = pr_k -ps_k
20:     TMP = 0
30:     FOR p = k0+1 TO k
40:             dpr = pr_p -pr_{p-1}
50:             IF (dpr >= P_max/2) THEN
60:                     TMP = TMP + P_max
70:             ELSEIF (dpr < - P_max/2)
80:                     TMP = TMP + P_max
90:             END
100:    END
110:    p̃õ^{kx}_k = pr_k + TMP + ps_{k0}
```

EP 3 491 335 B1

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2016209236 A1
- DE 102012224107 A1
- US 2006287824 A1